(19) Europäisches Patentamt
European Patent Office
Office européen des brevets

(11) **EP 2 395 044 B1**

(12) **EUROPEAN PATENT SPECIFICATION**

(45) Date of publication and mention
of the grant of the patent:
**23.09.2015 Bulletin 2015/39**

(21) Application number: **10738486.9**

(22) Date of filing: **01.02.2010**

(51) Int Cl.:
*C08J 5/18* (2006.01)          *B32B 7/02* (2006.01)
*B32B 27/34* (2006.01)          *C08G 69/26* (2006.01)

(86) International application number:
**PCT/JP2010/051336**

(87) International publication number:
**WO 2010/090154 (12.08.2010 Gazette 2010/32)**

(54) **HEAT-SHRINKABLE FILM**

WÄRMESCHRUMPFENDE FOLIE

FILM THERMORÉTRACTABLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.02.2009 JP 2009024004**

(43) Date of publication of application:
**14.12.2011 Bulletin 2011/50**

(73) Proprietor: **Mitsubishi Gas Chemical Company,
Inc.
Tokyo 100-8324 (JP)**

(72) Inventor: **KATO, Tomonori
Hiratsuka-shi
Kanagawa 254-0016 (JP)**

(74) Representative: **Gille Hrabal
Brucknerstrasse 20
40593 Düsseldorf (DE)**

(56) References cited:
**EP-A1- 0 987 103          EP-A1- 1 749 656
EP-A2- 0 967 073          JP-A- 3 087 254
JP-A- 3 115 460          JP-A- 2004 351 769
JP-A- 2006 152 288          JP-A- 2008 188 975
JP-A- 2010 052 402          US-A1- 2008 182 052
US-A1- 2008 182 053          US-B1- 6 416 832
US-B1- 6 699 549**

- **DATABASE WPI Week 200224 Thomson
  Scientific, London, GB; AN 2002-182077
  XP002693753, & JP 2001 310386 A (UNITIKA LTD)
  6 November 2001 (2001-11-06)**
- **DATABASE WPI Week 200229 Thomson
  Scientific, London, GB; AN 2002-231620
  XP002693754, & JP 2001 354787 A (UNITIKA LTD)
  25 December 2001 (2001-12-25)**

Remarks:
The file contains technical information submitted after
the application was filed and not included in this
specification

**Description**

TECHNICAL FIELD

The present invention relates to a heat-shrinkable film, particularly, a heat-shrinkable film excellent in gas-barrier properties and transparency which is suitable for shrink-packaging processed meat products, such as ham and sausage, and processed seafood products.

BACKGROUND ART

Gas-barrier films have been widely used for packaging block of meat, processed meat products, such as ham and sausage, and processed seafood products to protect the products from spoilage, discoloration, and browning during their storage and distribution. For packaging these foods, heat-shrinkable films have been widely used because attractive appearance is obtained by heat-shrinking the packaging material to tightly wrap the content. A film laminated with polyvinylidene chloride (PVDC) is known as a gas-barrier, heat-shrinkable film. However, since PVDC includes chlorine, the incineration of PVDC generates dioxins. Therefore, a chlorine-free packaging material has been demanded.

As the chlorine-free gas-barrier resin, polyamide resin, such as nylon 6 and poly-m-xylylene adipamide (N-MXD6) and ethylene-vinyl alcohol copolymer (EVOH) have been known. N-MXD6 is suitable as a material for packaging foods because of its excellent oxygen-barrier properties even in high humidity atmosphere and even after heat treatment for sterilization, such as boiling and retorting, and high mechanical strength. Therefore, its use as a laminate with a polyolefin base film (for example, Patent Document 1) and its use as a mixture with a different polymer such as nylon 6 (for example, Patent Document 2) have been disclosed.

Heat-shrink films comprising 0.1 to 5 mass parts of modified polyolefin added to 100 mass parts of polyamide are described in Patent Document 3. The polyamide resin comprises 55 to 85 mass% of aliphatic polyamide and 15 to 45 mass% of xylylene group polyamide units.

A heat-shrinkable multi-layer film comprising a polyamide layer is described in Patent Document 4. Example 2 of the document describes a 5-layer film which contains one polyamide layer C' containing a polyamide copolymer which is obtained from m-xylylenediamine, adipic acid and isophthalic acid. No information is provided to the relative amounts of adipic acid and isophthalic acid in the polyamide copolymer.

Patent Document 1: JP 5-57855A
Patent Document 2: JP 5-261874A
Patent Document 3: JP 2001-310386 A
Patent Document 4: EP 0 987 103 A1

DISCLOSURE OF INVENTION

A stretched film of N-MXD6 is less shrinkable as compared with polypropylene film and polystyrene film. To improve the shrinkability, the stretching temperature needs to be lowered. However, the cold-stretching reduces the transparency of the resultant stretched film. Therefore, it has been difficult to obtain a stretched film of N-MXD6 which combines high transparency and high shrinkability.

An object of the invention is to solve the above problem and provide a heat-shrinkable film which combines high gas-barrier properties, high shrinkability, and high transparency.

As a result of extensive research, the inventor has found that a polyamide resin having a limited range of crystallization speed which is achieved by a specific monomer composition gives a stretched film (polyamide stretched film) having high transparency even when stretched at lower temperature for obtaining high heat shrinkability and also having good gas-barrier properties. The present invention is based on this finding.

Thus, the present invention relates to a heat-shrinkable film which comprises at least one gas-barrier layer (A) comprising a stretched film of a polyamide resin which is obtained from a diamine component comprising 70 mol% or more of m-xylylenediamine and a dicarboxylic acid component comprising 80 to 98 mol% of $\alpha,\omega$-linear aliphatic dicarboxylic acid having 4 to 20 carbon atoms and 2 to 20 mol% of isophthalic acid.

The present invention further relates to a heat-shrunk film obtained by heat-treating the heat-shrinkable film mentioned above.

The present invention further relates to a method of producing a heat-shrinkable film which comprises a step of monoaxially or biaxially stretching a film of a polyamide resin which is obtained from a diamine component comprising 70 mol% or more of m-xylylenediamine and a dicarboxylic acid component comprising 80 to 98 mol% of $\alpha,\omega$-linear aliphatic dicarboxylic acid having 4 to 20 carbon atoms and 2 to 20 mol% of isophthalic acid.

According to the present invention, a heat-shrinkable film comprising a polyamide resin layer (polyamide stretched film) is provided, wherein the polyamide resin layer has a heat shrinkability sufficient for practical use together with excellent transparency and oxygen-barrier properties. Since the gas-barrier properties are little reduced even after boiling treatment or retorting treatment and immediately recovered, the heat-shrinkable film is suitable as a packaging material for foods, medicines, cosmetics, industrial products, etc.

BEST MODE FOR CARRYING OUT THE INVENTION

The polyamide resin used in the present invention is produced by the polycondensation of a diamine component comprising 70 mol% or more (inclusive of 100%) of m-xylylenediamine and a dicarboxylic acid component comprising 80 to 98 mol% of $\alpha,\omega$-linear aliphatic dicarboxylic acid having 4 to 20 carbon atoms and 2 to 20 mol% of isophthalic acid.

The polyamide resin is produced by melt polycondensation, for example, by heating a nylon salt of m-xylylenediamine, adipic acid, and isophthalic acid in the presence of water under pressure and allowing the melt polymerization to proceed while removing the added water and water eliminated by condensation. Alternatively, the polyamide resin is produced by directly adding m-xylylenediamine into a molten mixture of adipic acid and isophthalic acid and allowing polycondensation to proceed under atmospheric pressure. In this method, the polycondensation is allowed to proceed by continuously adding m-xylylenediamine so as to elevate the temperature of the reaction system, thereby maintaining the reaction system at temperature higher than the melting points of oligoamide and polyamide being formed and preventing the reaction system from solidifying.

The relative viscosity of the polyamide having a relatively low molecular weight obtained by melt polymerization is generally 2.28 or less when measured by using a solution of 1 g of polyamide resin in 100 ml of 96% sulfuric acid (the same applies below). If the relative viscosity after melt polymerization is 2.28 or less, a high quality polyamide resin with little gelation, discoloration, and whitening is obtained. When made into film, etc., however, draw down may occur because of its low viscosity. In addition, the thickness of a polyamide layer may become uneven when laminated with a polyolefin film, thereby making the production of a multi-layered laminate difficult. Therefore, the polyamide having a relatively low molecular weight obtained by melt polymerization is then subjected to solid state polymerization, if necessary. The solid state polymerization is conducted by heating pellet or powder of a relatively low-molecular weight polyamide resin from 150 °C to its melting point under reduced pressure or in an inert gas atmosphere. The relative viscosity of the polyamide subjected to solid state polymerization is preferably 2.3 to 4.2. Within this range, a good film free from draw down and a multi-layered film having a polyamide layer with little uneven thickness are obtained.

The diamine component for the raw material of the polyamide resin comprises 70 mol% of more, preferably 80 mol% or more, and more preferably 90 mol% or more (each inclusive of 100%) of m-xylylenediamine. Within the range of 70 mol% or more, the resultant polyamide resin exhibits excellent gas-barrier properties.

Examples of the diamine usable in combination with m-xylylenediamine include aliphatic diamines, such as tetramethylenediamine, pentamethylenediamine, hexamethylenediamine, octamethylenediamine, and nonamethylenediamine; aromatic diamines, such as p-phenylenediamine and p-xylylenediamine; and alicyclic diamines, such as bis(aminomethyl)cyclohexane, although not limited thereto.

The dicarboxylic acid component for the raw material of the polyamide resin comprises 80 to 98 mol%, preferably 80 to 97 mol%, more preferably 85 to 97 mol%, and still more preferably 85 to 95 mol% of $\alpha,\omega$-linear aliphatic dicarboxylic acid having 4 to 20 carbon atoms. Examples of $\alpha,\omega$-linear aliphatic dicarboxylic acid include aliphatic dicarboxylic acid, such as succinic acid, glutaric acid, pimelic acid, suberic acid, azelaic acid, adipic acid, sebacic acid, undecanedioic acid, and dodecanedioic acid, with adipic acid being preferred.

The dicarboxylic acid component further comprises 2 to 20 mol%, preferably 3 to 20 mol%, more preferably 3 to 15 mol%, and still more preferably 5 to 15 mol% of isophthalic acid. If being less than 2 mol%, the crystallization is not retarded sufficiently, to make it difficult to improve the stretchability at lower temperature while maintaining the gas-barrier properties. If stretching at higher temperature to obtain a stretched film showing a heat shrinkage of 30% or more at 150 °C, the haze of such film exceeds 2%/30 $\mu$m. Therefore, if the content of isophthalic acid is less than 2 mol%, a stretched film combining high heat shrinkage and high transparency cannot be obtained. If the content of isophthalic acid exceeds 20 mol%, the crystallization speed is largely lowered, but the glass transition temperature is increased to require high stretching temperature, failing to achieve a heat shrinkage of 20% or more at 150°C. If the crystallizability is excessively lowered by increasing the content of isophthalic acid to more than 20 mol%, pellets are likely to fuse-bond to each other in the drying process or pellet and powder are likely to fuse-bond to each other in the solid state polymerization, to make the production of raw polyamide resin very difficult.

The polyamide resin used in the invention is crystallizable and has a half crystallization time of 70 to 5000 s, preferably 80 to 5000 s, more preferably 80 to 2500 s, and still more preferably 100 to 1000 s when measured by a depolarized light intensity method in which the polyamide resin is isothermally crystallized at 140°C. By controlling the half crystallization time of the polyamide resin to 70 s or more, the whitening and forming defects attributable to crystallization during the stretching operation can be prevented. If the half crystallization time exceeds 5000 s, the crystallizability is excessively reduced, although the fabricability is improved. Therefore, the polyamide layer unfavorably becomes soft during the hot water treatment, likely to cause the unfavorable deformation of fabricated products, such as packages. In addition, pellets are likely to fuse-bond to each other in the drying process or pellet and powder are likely to fuse-bond to each other in the solid state polymerization, to make the production of raw polyamide resin difficult. By regulating the content of isophthalic acid in the dicarboxylic acid component within 2 to 20 mol%, preferably 3 to 20 mol%, the half crystallization time in the above range is obtained.

The depolarized light intensity method is a technique of determining the degree of crystallization of resin. When a sample of amorphous or molten resin crystallizes, the degree of birefringence (depolarization) of polarized light which transmits through the sample increases as the crystallization proceeds. Specifically, using an apparatus equipped with a light source, two polarizing plates perpendicular to each other, and a light-receiving element, a sample of amorphous or molten resin is allowed to isothermally crystallize between two polarizing plates. The degree of birefringence (depolarization) of polarized light which transmits through the sample increases as the crystallization proceeds. Simultaneously, the amount of light which reaches the light-receiving element after passing through the polarizing plate disposed down stream of the optical path increases as the crystallization proceeds, and the amount of light finally reaches a constant value. By measuring the amount of light (intensity), the degree of crystallization can be determined. The isothermal crystallization is carried out at a constant temperature not more than the melting point and not less than the glass transition point of the sample of amorphous or molten resin. The half crystallization time referred to herein is the time taken after the sample of amorphous or molten resin is immersed in an oil bath kept at 140 °C and until the amount of transmitted light reaches half of the constant value (crystallization of a half amount of sample) and used as the index of crystallization speed.

The oxygen transmission coefficient of the gas-barrier layer (A) (polyamide stretched film) measured at 23 °C and 60% RH is preferably 0.01 to 0.15 cc·mm/m$^2$·day·atm. If being 0.15 cc·mm/m$^2$·day·atm or less, the gas-barrier layer (A) does not need to be excessively thick for storing the packaged content well, and therefore, the stretchability is good to give a polyamide stretched film with good transparency and heat shrinkability at 150 °C.

A heat-shrinkable film which is made of only a single- or multi-layered polyamide stretched film (gas-barrier layer (A)) is produced by stretching a raw film of one or more polyamide resin layers obtained by a known film-forming method, such as T-die method and circular die method (inflation method). The melt extrusion temperature is preferably melting point + 5 °C to melting point + 40°C and more preferably melting point + 10 °C to melting point + 30°C. Within the above ranges, decomposition, gelation, discoloration, and foaming can be avoided. The stretching may be carried out monoaxially or biaxially, with biaxial stretching being preferred because the heat shrinkability of the resulting polyamide stretched film is good. The stretching method usable may include known monoaxial stretching, simultaneous biaxial stretching, and successive biaxial stretching. The stretching temperature is preferably 90 to 160°C and more preferably 110 to 150 °C. If 90°C or higher, stretching defects and whitening of the resultant stretched film can be prevented. If 160°C or lower, the obtained stretched film has good heat shrinkability, showing a heat shrinkage of 30% or more at 150°C.

The product of the stretching ratios in MD and TD is preferably 4 to 25 times, more preferably 9 to 25 times, and still more preferably 12 to 20 times, while taking the stretching ratio in the direction not stretched as 1. The stretching ratio in each of MD and TD is preferably 2 times or more and more preferably 3 times or more. If the product is 4 times or more, the film is well oriented by stretching and has good oxygen-barrier properties and mechanical strength. If 25 times or less, the film is not broken during the stretching and has a heat shrinkage of 20% or more, preferably 30% or more at 150°C.

The haze value of the gas-barrier layer (A) (polyamide stretched film) thus obtained is 2%/30 μm or less. According to the present invention, a high transparency of a haze value of 0.1%/30 μm can be obtained. The heat shrinkage is 20 to 80% and preferably 30 to 80% by areal ratio when measured using a film of 25 μm thick at 150 °C.

The gas-barrier layer (A) may be made into a multi-layered heat-shrinkable film in combination with a film layer of another thermoplastic resin. For example, a heat-sealable multi-layered heat-shrinkable film with improved impact strength and flexibility is obtained by laminating the gas-barrier layer (A) and a polypropylene film via an adhesive layer.

A multi-layered heat-shrinkable film is produced, for example, by laminating the gas-barrier layer (A) (polyamide stretched film) with a thermoplastic resin film which may be non-stretched, monoaxially stretched or biaxially stretched (laminating method). The films may be laminated via an adhesive layer and a thermoplastic resin film may be laminated on each side of the polyamide stretched film. Examples of the thermoplastic resin include low density polyethylene, high density polyethylene, polypropylene, ethylene-vinyl acetate copolymer, polystyrene, polyester, such as polyethylene terephthalate, and modified polyolefin. These resins may be use alone or in combination of two or more. The thermoplastic resin film may be a single-layered film or a multi-layered film. Examples of the resin for forming the adhesive layer include modified product obtained by grafting maleic anhydride to a polymer, such as ethylene-vinyl acetate copolymer, high density polyethylene, low density polyethylene, linear low density polyethylene, and polypropylene and polyester, and a resin composition mainly composed of the graft modified product.

Alternatively, a multi-layered heat-shrinkable film is obtained by melt coextruding the gas-barrier layer (A), an adhesive resin and a thermoplastic resin into a multi-layered raw film and monoaxially or biaxially stretching the multi-layered raw film in the same manner as described above (multi-layered stretching method). Specifically, a multi-layered heat-shrinkable film is obtained by forming a multi-layered raw film by a film-forming method, such as co-extrusion T-die method and co-extrusion circular die method (inflation method), and stretching the multi-layered raw film in the same stretching method, stretching temperature, and stretching ratio as in the production of the heat shrinkable stretched film composed of only a single-layered or two or more layered polyamide stretched film.

The multi-layered, heat-shrinkable film of the invention obtained by a laminate method or a multi-layer stretching method has a layered structure, for example, but not limited to, a three-kind, three-layered structure (A)/(B)/(C) and a three-kind, five-layered structure (C)/(B)/(A)/(B)/(C), wherein A is a gas-barrier layer, B is an adhesive layer, and C is a thermoplastic resin layer.

In the heat-shrinkable film of the invention which is made of only a single or two or more layers of polyamide stretched films (gas-barrier layer (A)), the thickness of each gas-barrier layer (A) is preferably 2 to 50 $\mu$m. In the multi-layered, heat-shrinkable film, the thickness is preferably 2 to 50 $\mu$m for layer A, 2 to 20 $\mu$m for layer B, 10 to 100 $\mu$m for layer C, and 20 to 200 $\mu$m in total.

To improve flexibility and impact strength, the gas-barrier layer (A) may be included with, if necessary, an aliphatic polyamide, such as nylon 6, nylon 66, and nylon 6-66, an ionomer, or a thermoplastic elastomer, such as $\alpha$-olefin copolymer, as long as the effects of the invention, i.e., high gas-barrier properties, high shrinkability, and high transparency, are not adversely affected. In addition, an antistatic agent, a lubricant, a mold release agent, an antioxidant, an ultraviolet absorber, a phyllosilicate, an inorganic or organic salt of metal such as Co, Mn, and Zn, and complex may be added. These optional resins and additives may be dry-blended or melt-kneaded in a single- or twin-screw extruder.

The packaging material and other materials obtained from the heat-shrinkable film of the invention are heated for shrinking preferably at 80 to 170 °C and more preferably at 100 to 160 °C. If heat-shrunk at 80 °C or higher, the material shrinks sufficiently to tightly wrap the content to be stored and defect such as wrinkling which deteriorates the appearance of packaged products does not occur. If heat-shrunk at 170 °C or lower, the surface of the content is not spoiled.

EXAMPLES

The present invention will be described in detail with reference to the examples and comparative examples. However, it should be noted that the scope of the present invention is not limited to the following examples. The methods of evaluations used in the examples and comparative examples are described below.

(1) Relative viscosity

In 100 cc of 96% sulfuric acid, accurately weighed 1 g of polyamide resin was dissolved at 20 to 30 °C under stirring. Immediately after complete dissolution, 5 cc of the solution was placed in Cannon-Fenske viscometer. The viscometer was allowed to stand for 10 min in a thermostatic chamber kept at 25 °C $\pm$ 0.03 °C and then the dropping time (t) was measured. The dropping time of 96% sulfuric acid (to) was also measured in the same manner. Using the measured t and to, the relative viscosity was calculated by the following formula (A):

$$\text{Relative viscosity} = t/t_0 \qquad (A).$$

(2) Half crystallization time

Measured by a depolarized light intensity method using a polymer crystallization speed measuring apparatus "Model MK701" manufactured by Kotaki Seisakusho Co., Ltd., under the following conditions.

Melting Temperature of Sample: 260 °C
Melting Time of Sample: 3 min
Crystallization Bath Temperature: 140 °C

(3) Haze

Measured according to JIS K-7105 (ASTM D-1003) using a color/turbidimeter COH-300A manufactured by Nippon Denshoku Industries Co., Ltd.

(4) Oxygen transmission coefficient

Measured according to JIS K-7126 (ASTM D3985) using an oxygen transmittance meter (Model OX-TRAN 10/50A) manufactured by Modern Controls Corp. at 23 °C and 60% relative humidity. The oxygen transmission coefficient was calculated from the measured oxygen transmission ant the thickness of sample.

(5) Heat shrinkage at 150 °C

A 10 cm x 10 cm square was drawn in the central portion of a polyamide stretched film of 25 $\mu$m thick. Then, the film was heat-treated in a hot air dryer at 150 °C for 30 s. The shrinkage was calculated from the areas of squares before and after the heat treatment.

EXAMPLE 1

Into a jacketed reaction vessel equipped with a stirring device, a partial condenser, a condenser, a thermometer, a dropping vessel, and a nitrogen inlet, adipic acid and isophthalic acid were charged in a molar ratio of 96:4. After thoroughly replacing the inner atmosphere with nitrogen, the dicarboxylic acid component was made flowable by heating to 170°C in nitrogen stream, and then, m-xylylenediamine was added dropwise under stirring. During the addition, the inner temperature was continuously raised to 245 °C while removing the water which was distilled as m-xylylenediamine was added outside the reaction system through the partial condenser and the condenser.

After the dropwise addition of m-xylylenediamine, the inner temperature was continuously raised to 255 °C and the reaction was continued for 15 min. Thereafter, the inner pressure was continuously reduced to 600 mmHg over 10 min and the reaction was further continued for 40 min while continuously raising the reaction temperature to 260 °C. After the reaction, the polymer was discharged into a form of strand from the nozzle at the lower portion of the reaction vessel under a nitrogen pressure of 0.2 MPa. The strand was cooled and cut into pellets (polyamide 1). The relative viscosity of the obtained polyamide 1 was 2.1 and the melting point was 234 °C.

The pellets were charged into a stainless rotary drum heater and the drum was rotated at 5 rpm. After fully replacing the inner atmosphere with nitrogen, the reaction system was heated from room temperature to 140 °C in a small amount of nitrogen flow. After reaching 140 °C, the pressure of reaction system was reduced to 1 torr and the reaction system was heated to 180 °C over 110 min. After the temperature reached 180 °C, the solid state polymerization was allowed to further proceed at the same temperature for 180 min.

After the reaction, the evacuation was stopped and the temperature was lowered under nitrogen flow. When the temperature reached 60 °C, pellets were taken out of the heater (polyamide 2). The polyamide 2 had a relative viscosity of 2.5, a melting point of 234 °C, and a glass transition point of 91 °C. Polyamide 2 was melt-extruded from a twin-screw extruder (PTM-30 manufactured by Plabor Co., Ltd.) at 260 °C and made into a single-layered non-stretched film of 400 $\mu$m thick by T-die-cooling roll method. The half crystallization time of the obtained film was 90 s.

The single-layered non-stretched film thus obtained was biaxially stretched in MD and TD simultaneously at a stretching temperature of 115 °C and a stretching ratio of MD x TD = 4 x 4 times by a biaxial stretching machine (tenter type manufactured by Toyo Seiki Seisaku-Sho, Ltd.) to obtain a stretched film which has a Haze/30 $\mu$m of 1.1% and an oxygen transmission coefficient of 0.06 cc•mm/m$^2$•day•atm.

The obtained stretched film was then measured for the heat shrinkage by heating in a hot air dryer at 150 °C. The heat shrinkage at 150 °C was 33%. The results are shown in Table 1.

EXAMPLE 2

The synthesis of a solid state-polymerized polyamide resin (polyamide 3), the production of a single-layered non-stretched film, and the production of a stretched film were conducted in the same manner as in Example 1 except for using a dicarboxylic acid component consisting of 94 mol% of adipic acid and 6 mol% of isophthalic acid.

The obtained polyamide 3 had a relative viscosity of 2.7, a melting point of 231 °C, and a glass transition point of 92 °C. The half crystallization time of the single-layered non-stretched film was 225 s. The stretched film had a Haze/30 $\mu$m of 0.4% and an oxygen transmission coefficient of 0.06 cc•mm/m$^2$•day•am. The heat shrinkage at 150 °C was 37%. The results are shown in Table 1.

EXAMPLE 3

The synthesis of a solid state-polymerized polyamide resin (polyamide 4), the production of a single-layered non-stretched film, and the production of a stretched film were conducted in the same manner as in Example 1 except for using a dicarboxylic acid component consisting of 85 mol% of adipic acid and 15 mol% of isophthalic acid.

The obtained polyamide 4 had a relative viscosity of 2.7, a melting point of 216 °C, and a glass transition point of 98 °C. The half crystallization time of the single-layered non-stretched film was 2000 s. The stretched film had a Haze/30 $\mu$m of 1.3% and an oxygen transmission coefficient of 0.06 cc•mm/m$^2$•day•atm. The heat shrinkage at 150 °C was 53%. The results are shown in Table 1.

COMPARATIVE EXAMPLE 1

The synthesis of a solid state-polymerized polyamide resin (polyamide 5), the production of a single-layered non-stretched film, and the production of a stretched film were conducted in the same manner as in Example 1 except for using a dicarboxylic acid component consisting of 100 mol% of adipic acid.

The obtained polyamide 5 had a relative viscosity of 2.6, a melting point of 240 °C, and a glass transition point of 88 °C. The half crystallization time of the single-layered non-stretched film was as short as 30 s. The stretched film had a Haze/30 $\mu$m of 1.6% and an oxygen transmission coefficient of 0.06 cc•mm/m$^2$•day•atm. The heat shrinkage at 150 °C was 15%, being insufficient for shrinking package. The results are shown in Table 2.

EXAMPLE 4

The synthesis of a solid state-polymerized polyamide resin (polyamide 6), the production of a single-layered non-stretched film, and the production of a stretched film were conducted in the same manner as in Example 1 except for using a dicarboxylic acid component consisting of 98 mol% of adipic acid and 2 mol% isophthalic acid.

The obtained polyamide 6 had a relative viscosity of 2.6, a melting point of 237 °C, and a glass transition point of 90 °C. The half crystallization time of the single-layered non-stretched film was 72 s. The stretched film had a Haze/30 $\mu$m of 1.2% and an oxygen transmission coefficient of 0.06 cc•mm/m$^2$•day•atm. The heat shrinkage at 150 °C was 22%. The results are shown in Table 2.

COMPARATIVE EXAMPLE 2

The synthesis of a solid state-polymerized polyamide resin (polyamide 7), the production of a single-layered non-stretched film, and the production of a stretched film were conducted in the same manner as in Example 1 except for using a dicarboxylic acid component consisting of 75 mol% of adipic acid and 25 mol% isophthalic acid.

The obtained polyamide 7 had a relative viscosity of 2.4 and a glass transition point of 105 °C, but did not show a definite melting point. The depolarization due to crystallization was not observed even after 5000 s or longer. In addition, the stretched film was not obtained because the film was broken when stretching at 115 °C. The results are shown in Table 2.

EXAMPLE 5

The synthesis of a solid state-polymerized polyamide resin, the production of a single-layered non-stretched film, and the production of a stretched film were conducted in the same manner as in Example 2 except for changing the stretching temperature to 105 °C.

The stretched film had a Haze/30 $\mu$m of 0.5% and a heat shrinkage at 150 °C of 73%. The results are shown in Table 3.

COMPARATIVE EXAMPLE 3

The synthesis of a solid state-polymerized polyamide resin, the production of a single-layered non-stretched film, and the production of a stretched film were conducted in the same manner as in Comparative Example 1 except for changing the stretching temperature to 105 °C.

The stretched film had a Haze/30 $\mu$m of as high as 2.8% and a heat shrinkage at 150 °C of 36%. The results are shown in Table 3.

COMPARATIVE EXAMPLE 4

The synthesis of a solid state-polymerized polyamide resin, the production of a single-layered non-stretched film, and the production of a stretched film were conducted in the same manner as in Comparative Example 2 except for changing the stretching temperature to 130 °C.

The stretched film had a Haze/30 $\mu$m of 1.3% and an oxygen transmission coefficient of 0.09 cc•mm/m$^2$•day•atm. The heat shrinkage at 150 °C was 17%, being insufficient for shrinking package. The results are shown in Table 3.

The stretched films obtained in Examples 1 to 5 combined heat shrinkability sufficient for practical use and excellent transparency, because the crystallization speed was moderate. In Comparative Examples 1, 2 and 4, since the composition of the dicarboxylic acid component of polyamide resin was outside the range of the invention, the half crystallization time was outside the range specified in the invention. Therefore, the stretched films poor in the heat shrinkability were obtained. In Comparative Example 3 in which the same procedure as in Comparative Example 1 was repeated except for lowering the stretching temperature, the shrinkability was improved, but whitening occurred because the half crystallization time was short (high crystallization speed) to give the stretched film poor in the transparency. In contrast in Example 5 in which the same procedure as in Example 2 was repeated except for lowering the stretching temperature, since the half crystallization time was within the range specified in the invention, the stretched film with improved shrinkability was obtained without spoiling the transparency even when the stretching temperature was lowered.

Table 1

|  | Example 1 | Example 2 | Example 3 |
|---|---|---|---|
| Polyamide resin |  |  |  |
|   diamine component (mol%) |  |  |  |
|     MXDA | 100 | 100 | 100 |
|   dicarboxylic acid component (mol%) |  |  |  |
|     AA | 96 | 94 | 85 |
|     IA | 4 | 6 | 15 |
|   melting point (°C) | 234 | 231 | 216 |
|   glass transition point (°C) | 91 | 92 | 98 |
|   half crystallization time (140 °C, s) | 90 | 225 | 2000 |
| Stretching temperature (°C) | 115 | 115 | 115 |
| Gas-barrier layer (A) |  |  |  |
|   oxygen transmission coefficient (cc•mm/m$^2$•day•atm) | 0.06 | 0.06 | 0.06 |
|   haze (%/30 μm) | 1.1 | 0.4 | 1.3 |
|   heat shrinkage (%) at 25 μm thick and 150 °C | 33 | 37 | 53 |

MXDA: m-xylylenediamine
AA: adipic acid
IA: isophthalic acid

Table 2

|  | Comparative example 1 | Example 4 | Comparative example 2 |
|---|---|---|---|
| Polyamide resin |  |  |  |
|   diamine component (mol%) |  |  |  |
|     MXDA | 100 | 100 | 100 |
|   dicarboxylic acid component (mol%) |  |  |  |
|     AA | 100 | 98 | 75 |
|     IA | 0 | 2 | 25 |
|   melting point (°C) | 240 | 237 | - |
|   glass transition point (°C) | 88 | 90 | 105 |
|   half crystallization time (140 °C, s) | 30 | 72 | unmeasurable |
| Stretching temperature (°C) | 115 | 115 | 115 broken |
| Gas-barrier layer (A) |  |  |  |
|   oxygen transmission coefficient (cc•mm/m$^2$•day•atm) | 0.06 | 0.06 | - |
|   haze (%/30 μm) | 1.6 | 1.2 | - |

(continued)

|  | Comparative example 1 | Example 4 | Comparative example 2 |
|---|---|---|---|
| heat shrinkage (%) at 25 μm thick and 150 °C | 15 | 22 | - |

MXDA: m-xylylenediamine
AA: adipic acid
IA: isophthalic acid

Table 3

|  | Example 5 | Comparative example 3 | Comparative example 4 |
|---|---|---|---|
| Polyamide resin |  |  |  |
| diamine component (mol%) |  |  |  |
| MXDA | 100 | 100 | 100 |
| dicarboxylic acid component (mol%) |  |  |  |
| AA | 94 | 100 | 75 |
| IA | 6 | 0 | 25 |
| melting point (°C) | 231 | 240 |  |
| glass transition point (°C) | 92 | 88 | 105 |
| half crystallization time (140 °C, s) | 225 | 30 | unmeasurable |
| Stretching temperature (°C) | 105 | 105 | 130 |
| Gas-barrier layer (A) |  |  |  |
| oxygen transmission coefficient (cc•mm/m$^2$•day•atm) | 0.06 | 0.06 | 0.09 |
| haze (%/30 μm) | 0.5 | 2.8 | 1.3 |
| heat shrinkage (%) at 25 μm thick and 150 °C | 73 | 36 | 17 |

MXDA: m-xylylenediamine
AA: adipic acid
IA: isophthalic acid

## Claims

1. A heat-shrinkable film which comprises at least one gas-barrier layer (A) comprising a stretched film of a polyamide resin which is obtained from a diamine component comprising 70 mol% or more of m-xylylenediamine and a dicarboxylic acid component comprising 80 to 98 mol% of α,ω-linear aliphatic dicarboxylic acid having 4 to 20 carbon atoms and 2 to 20 mol% of isophthalic acid,
wherein the haze of the gas-barrier layer (A) is 2%/30 μm or less, and wherein the heat shrinkage when measured using a film of 25 μm thick at 150°C of the gas-barrier layer (A) is 20 to 80% by areal ratio.

2. The heat-shrinkable film according to claim 1, wherein an oxygen transmission coefficient of the gas-barrier layer (A) is 0.01 to 0.15 cc·mm/m$^2$·day·atm when measured at 23 °C and 60% RH.

3. The heat-shrinkable film according to claim 1, wherein a half crystallization time of the polyamide resin at 140 °C is 70 to 5000 s when measured by a depolarized light intensity method.

4. The heat-shrinkable film according to claim 1, wherein the gas-barrier layer (A) is a stretched film obtained by stretching a film of the polyamide resin at 90 to 160 °C in a stretching ratio of 4 to 25 times when expressed by a product of a stretching ratio in MD and a stretching ratio in TD.

5. A heat-shrunk film obtained by heat-treating the heat-shrinkable film as defined in claim 1.

6. A method of producing a heat-shrinkable film which comprises a step of monoaxially or biaxially stretching a film of a polyamide resin which is obtained from a diamine component comprising 70 mol% or more of m-xylylenediamine and a dicarboxylic acid component comprising 80 to 98 mol% of $\alpha,\omega$-linear aliphatic dicarboxylic acid having 4 to 20 carbon atoms and 2 to 20 mol% of isophthalic acid , wherein a haze of the gas-barrier layer (A) is 2%/30 $\mu$m or less, and wherein a heat shrinkage when measured using a film of 25 $\mu$m thick at 150°C of the gas-barrier layer (A) is 20 to 80% by areal ratio.

7. The method according to claim 6, wherein the stretching is conducted at 90 to 160 °C in a stretching ratio of 4 to 25 times when expressed by a product of the stretching ratio in MD and the stretching ratio in TD.

## Patentansprüche

1. Hitzeschrumpfbarer Film, welcher mindestens eine Gasbarriereschicht (A) umfasst, die einen gestreckten Film aus einem Polyamidharz umfasst, welches erhalten wird aus einer Diamin-Komponente, die 70 Mol-% oder mehr m-Xylylendiamin enthält, und einer Dicarbonsäure-Komponente, die 80 bis 98 Mol-% einer linearen aliphatischen $\alpha,\omega$-Dicarbonsäure mit 4 bis 20 Kohlenstoffatomen und 2 bis 20 Mol-% Isophthtalsäure umfasst, wobei die Trübung der Gasbarriereschicht (A) 2 %/30 $\mu$m oder weniger beträgt und wobei die Hitzeschrumpfung der Gasbarriereschicht (A), gemessen bei einem Film von 25 $\mu$m Dicke bei 150 °C, 20 bis 80 % als Flächenverhältnis ist.

2. Hitzeschrumpfbarer Film nach Anspruch 1, wobei der Sauerstofftransmissionskoeffizient der Gasbarriereschicht (A) 0,01 bis 0,15 cc•mm/m$^2$•Tag•atm beträgt, gemessen bei 23 °C und 60 % RH.

3. Hitzeschrumpfbarer Film nach Anspruch 1, wobei die Halbkristallisationszeit des Polyamidharzes bei 140 °C 70 bis 5000 Sekunden beträgt, gemessen mit einer Intensitätsmethode mit depolarisiertem Licht.

4. Hitzeschrumpfbarer Film nach Anspruch 1, wobei die Gasbarriereschicht (A) ein gestreckter Film ist, der erhalten wird durch Strecken eines Films aus dem Polyamidharz bei 90 bis 160 °C in einem Streckverhältnis von 4 bis 25, ausgedrückt durch ein Produkt aus einem Streckverhältnis in MD und einem Streckverhältnis in TD.

5. Hitzegeschrumpfter Film, erhalten durch Wärmebehandlung des wie in Anspruch 1 definierten hitzeschrumpfbaren Films.

6. Verfahren zur Herstellung eines hitzeschrumpfbaren Films, welches ein Schritt des monoaxialen oder biaxialen Streckens eines Films aus einem Polyamidharz umfasst, das erhalten wird aus einer Diamin-Komponente, die 70 Mol-% oder mehr m-Xylylendiamin umfasst, und einer Dicarbonsäure-Komponente, die 80 bis 98 Mol-% einer linearen aliphatischen $\alpha,\omega$-Dicarbonsäure mit 4 bis 20 Kohlenstoffatomen und 2 bis 20 Mol-% Isophthalsäure umfasst, wobei eine Trübung der Gasbarriereschicht (A) 2 %/30$\mu$ m oder weniger beträgt und wobei eine Hitzeschrumpfung des Gasbarrierefilms (A), gemessen bei einem Film von 25 $\mu$m Dicke bei 150 °C, 20 bis 80 % als Flächenverhältnis ist.

7. Verfahren nach Anspruch 6, wobei das Strecken bei 90 bis 160 °C in einem Streckverhältnis von 4 bis 25 durchgeführt wird, ausgedrückt durch ein Produkt aus dem Streckverhältnis in MD und dem Streckverhältnis in TD.

## Revendications

1. Film thermorétractable qui comprend au moins une couche de barrière de gaz (A) comprenant un film étiré d'une résine de polyamide qui est obtenu d'un composant de diamine comprenant 70 % en mole ou plus de m-xylylènediamine et un composant d'acide dicarboxylique comprenant 80 à 98 % en mole d'un acide $\alpha,\omega$-dicarboxylique linéaire ayant de 4 à 20 atomes de carbone et 2 à 20 % en mole de l'acide isophtalique, dans lequel la brume de la couche de barrière de gaz (A) est 2 % / 30 $\mu$m ou moins et dans lequel le retrait thermique est 20 à 80 % par un rapport surfacique lorsque mesuré en utilisant un film ayant une épaisseur de 25 $\mu$m à 150 °C.

2. Film thermorétractable selon la revendication 1, dans lequel un coefficient de transmission de l'oxygène de la couche de barrière de gaz (A) est 0,01 à 0,15 cc•mm/m$^2$•jour•atm lorsque mesuré à 23 °C et 60 % RH.

**3.** Film thermorétractable selon la revendication 1, dans lequel un demi-temps de cristallisation de la résine de polyamide à 140 °C est 70 à 5000 s lorsque mesuré par un procédé de l'intensité de la lumière polarisée.

**4.** Film thermorétractable selon la revendication 1, dans lequel la couche de barrière de gaz (A) est un film étiré obtenu par l'étirage d'un film de la résine de polyamide à 90 à 160 °C en un rapport d'étirage de 4 à 25 fois lorsque exprimé par un produit d'un rapport d'étirage vers MD et un rapport d'étirage vers TD.

**5.** Film thermorétracté obtenu par un traitement de chauffage du film thermorétractable selon la revendication 1.

**6.** Procédé de production d'un film thermorétractable qui comprend une étape de l'étirage monoaxiale ou biaxiale d'un film d'une résine de polyamide qui est obtenu d'un composant de diamine comprenant 70 % en mole ou plus de m-xylylènediamine et un composant d'acide dicarboxylique comprenant 80 à 98 % en mole d'un acide $\alpha,\omega$-dicarboxylique linéaire ayant de 4 à 20 atomes de carbone et 2 à 20 % en mole de l'acide isophtalique,
dans lequel une brume de la couche de barrière de gaz (A) est 2 % / 30 $\mu$m ou moins et dans lequel le retrait thermique est 20 à 80 % par un rapport surfacique lorsque mesuré en utilisant un film ayant une épaisseur de 25 $\mu$m à 150 °C.

**7.** Procédé selon la revendication 6, dans lequel l'étirage est effectué à 90 à 160 °C en un rapport d'étirage de 4 à 25 fois lorsque exprimé par un produit d'un rapport d'étirage vers MD et un rapport d'étirage vers TD.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5057855 A
- JP 5261874 A
- JP 2001310386 A
- EP 0987103 A1